# EUROPEAN PATENT APPLICATION

(11) **EP 3 117 995 A1**
(43) Date of publication of application: **18.01.2017**
(21) Application number: 15762312.5
(22) Date of filing: 09.03.2015
(51) Int. Cl.: B32B 27/32, B32B 9/00, C08F 210/06, C08J 7/04, C08K 5/521, C08L 23/14

(54) **COATED POLYPROPYLENE-BASED MOLDED ARTICLE**

(30) Priority: 10.03.2014 JP 2014045958
(71) Applicant: Kirin Company Limited, Tokyo 164-0001 (JP); Prime Polymer Co., Ltd., Tokyo 105-7117 (JP)
(72) Inventor: KATO, Katsuya, Tokyo 164-0001 (JP); NAKAYA, Masaki, Tokyo 164-0001 (JP); UEKITA, Hiroyuki, Ichihara-shi Chiba 299-0108 (JP)
(74) Representative: Hoffmann Eitle
(86) International application number: PCT/JP2015/056766
(87) International publication number: WO 2015/137262

(57) **Abstract**

An object of the present invention is to provide a coated polypropylene-based molded article having an excellent gas barrier property. A coated polypropylene-based molded article according to the present invention includes a molded article formed of a polypropylene-based resin composition and a thin film formed on a surface of the molded article, the polypropylene-based resin composition includes a polypropylene-based resin (D) and a nucleating agent (C), the content of the nucleating agent (C) is from 0.05 to 0.5 parts by mass with respect to 100 parts by mass of the polypropylene-based resin (D).

## Description

### Technical Field

The present invention relates to a coated polypropylene-based molded article.

### Background Art

A molded article formed of a polypropylene-based resin composition (hereinafter, also referred to as a polypropylene-based molded article) is used for various packaging containers. However, the polypropylene-based molded article has such a disadvantage that an oxygen barrier property is low or components of contents are easily sorbed thereby, although having an advantage of a higher heat resistance than polyethylene terephthalate (PET). In order to improve the oxygen barrier property or prevent sorption of a plastic molded article, a thin film is formed on a surface of the molded article. However, it is generally known that a polypropylene-based resin lacks in a functional group suitable for printing or coating adhesion. Even when a thin film is formed on a surface of a polypropylene-based molded article, there is such a disadvantage that peeling occurs easily or a gas barrier property is hardly improved.

A film having a gas barrier property enhanced by using a substrate film having a smooth surface in which an average surface roughness SRa measured for an area of 200 µm × 200 µm or more is 20 nm or less and forming an inorganic compound thin film on a surface of this substrate film, has been proposed (for example, refer to Patent Literature 1). In addition, a resin composition which can not only improve adhesion of a thin film but also can improve a gas barrier property significantly by distributing a grafted functional group in a high concentration at a nanoscale, has been proposed (for example, refer to Patent Literature 2).

### Citation List

### Patent Literature

Patent Literature 1: JP 2001-310412 A
Patent Literature 2: JP 2013-136777 A

### Summary of Invention

### Technical Problem

In a polypropylene-based molded article, physical properties become suitable for industrial applications by blending various additives in a resin, and therefore generally so-called bleeding that a low molecular weight substance is diffused and deposited on a surface occurs. If such bleeding occurs, a surface of the molded article becomes coarse and unstable, and a dense thin film cannot be formed. As a result, it is considered that improvement of a gas barrier property becomes difficult. In addition, if bleeding occurs, transparency is reduced. The technology described in Patent Literature 1 has such a disadvantage that a thin film cannot be dense by bleeding occurs and a high gas barrier property cannot be obtained even when a thin film is formed. In the technology described in Patent Literature 2, a thin film having an excellent adhesion and gas barrier property can be disposed on a surface of a molded article, but further improvement of the gas barrier property is desired. Therefore, a specific means or structure of a molded article capable of improving the gas barrier property significantly by forming a dense thin film directly on a surface of a polypropylene-based molded article is not known.

An object of the present invention relates to a coated polypropylene-based molded article obtained by forming a thin film on a surface of a polypropylene-based molded article, and is to provide a coated polypropylene-based molded article having an excellent gas barrier property and moldability. Particularly, an object of the present invention is to provide a coated polypropylene-based molded article suitable for applications of beverages and food and having high transparency, high impact resistance, and low stickiness. In addition, an object of the present invention is to provide a coated polypropylene-based molded article having heat resistance and capable of maintaining an excellent gas barrier property with respect to a heat load in a thin film-forming step, a sterilization step, or the like for a polypropylene-based molded article.

### Solution to Problem

A coated polypropylene-based molded article according to the present invention includes a molded article formed of a polypropylene-based resin composition and a thin film formed on a surface of the molded article, and is characterized in that the polypropylene-based resin composition includes a polypropylene-based resin (D) satisfying requirements (D-1) to (D-4) and a nucleating agent (C) satisfying requirements (C-1) to (C-3), and the content of the nucleating agent (C) is from 0.05 to 0.5 parts by mass with respect to 100 parts by mass of the polypropylene-based resin (D):
(C-1) the nucleating agent (C) contains an alkali metal element;
(C-2) the nucleating agent (C) contains an organic phosphoric acid ester compound represented by general formula (chemical formula 1): 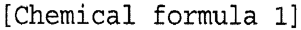 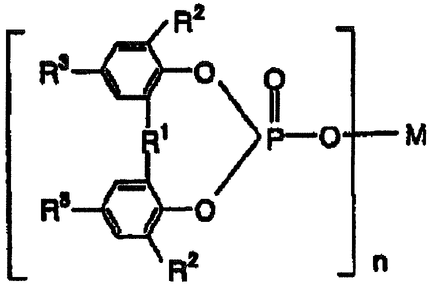 (in (chemical formula 1), R1 is a divalent hydrocarbon group having 1 to 10 carbon atoms, R2 and R3 are each hydrogen or a hydrocarbon group having 1 to 10 carbon atoms, R2 and R3 may be the same as or different from each other, M is an n-valent metal atom, and n is an integer of 1 to 3);
(C-3) the nucleating agent (C) contains at least one of aliphatic carboxylic acids and derivatives thereof;
(D-1) a melt flow rate (MFR) measured in conformity to ASTM D-1238 at a measurement temperature of 230°C at a 2.16 kg load is in a range of 11 to 100 g/10 minutes;
(D-2) a crystalline melting point measured in conformity to JIS-K7121:1987 with a differential scanning calorimetry (DSC) is in a range of 140 to 155°C;
(D-3) when a main elution peak temperature determined by temperature rising elution fractionation chromatography is referred to as Tp, an amount Wp1 (% by mass) eluted in a higher temperature range than Tp with respect to the total elution amount at 0 to 135°C is 26.5% by mass or more; and
(D-4) an amount Wp2 (% by mass) eluted at 10°C or lower, determined by temperature rising elution fractionation chromatography, is 4.0% by mass or less.

In the coated polypropylene-based molded article according to the present invention, it is preferable that the polypropylene-based resin composition includes a polypropylene-based resin (A) satisfying requirements (A-1) and (A-2) and a polypropylene-based resin (B) satisfying requirements (B-1) and (B-2) as the polypropylene-based resin (D), and the content of the polypropylene-based resin (A) is from 1 to 99 parts by mass with respect to 100 parts by mass of the total mass of the polypropylene-based resin (A) and the polypropylene-based resin (B):
(A-1) the polypropylene-based resin is a copolymer of propylene, and one or more olefins selected from the group consisting of ethylene and α-olefins having 4 to 20 carbon atoms;
(A-2) a crystalline melting point measured in conformity to JIS-K7121:1987 with a differential scanning calorimetry (DSC) is in a range of 130 to 150°C;
(B-1) the polypropylene-based resin is a propylene homopolymer or a copolymer of propylene, and one or more olefins selected from the group consisting of ethylene and α-olefins having 4 to 20 carbon atoms; and
(B-2) a crystalline melting point measured in conformity to JIS-K7121:1987 with a differential scanning calorimetry (DSC) is in a range of 151 to 165°C.

By using such a resin, in various molding methods including blow molding of a hollow container, high moldability can be imparted, and a surface is smoothened easily.

In the coated polypropylene-based molded article according to the present invention, it is preferable that the polypropylene-based molded article is a container. Without using different kinds of resin materials, it is possible to obtain a gas barrier property container having a high economic efficiency and moldability.

In the coated polypropylene-based molded article according to the present invention, it is preferable that a part or the whole of the thin film is any one of a carbon film, a SiOx film, a SiOC film, a metal oxide film, and a metal nitride film. This allows a molded article to have an excellent gas barrier property.

In the coated polypropylene-based molded article according to the present invention, it is preferable that an oxygen permeability of the coated polypropylene-based molded article is preferably one tenth or less of an oxygen permeability of a polypropylene-based molded article not coated with a thin film. A dense thin film having an excellent adhesion can be formed, and therefore a gas barrier property of a molded article having a thin film formed can be enhanced. In a case of a container for food and beverages, sufficient quality retention performance can be imparted to most of the food and beverage applications, for example, filled in a typical polyethylene terephthalate container.

### Advantageous Effects of Invention

The present invention relates to a coated polypropylene-based molded article obtained by forming a thin film on a surface of a polypropylene-based molded article, and can provide a coated polypropylene-based molded article having an excellent gas barrier property.

### Description of Embodiments

Next, the present invention will be described in detail by describing an embodiment, but the present invention is not construed as being limited to description thereof. As long as an effect of the present invention is exhibited, the embodiment may be modified variously.

A coated polypropylene-based molded article according to the present embodiment includes a molded article formed of a polypropylene-based resin composition and a thin film formed on a surface of the molded article, wherein the polypropylene-based resin composition includes a polypropylene-based resin (D) satisfying requirements (D-1) to (D-4) and a nucleating agent (C) satisfying requirements (C-1) to (C-3),and the content of the nucleating agent (C) is from 0.05 to 0.5 parts by mass with respect to 100 parts by mass of the polypropylene-based resin (D).

(C-1) The nucleating agent (C) contains an alkali metal element.

(C-2) The nucleating agent (C) contains an organic phosphoric acid ester compound represented by general formula (chemical formula 1): 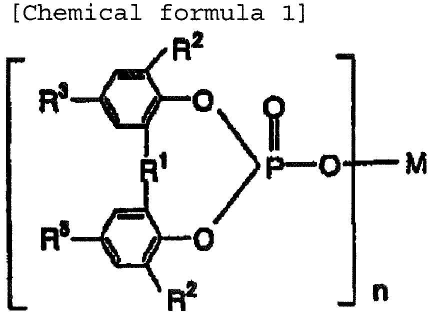 (In (chemical formula 1), R1 is a divalent hydrocarbon group having 1 to 10 carbon atoms, R2 and R3 are each a hydrogen or a hydrocarbon group having 1 to 10 carbon atoms, R2 and R3 may be the same as or different from each other, M is an n-valent metal atom, and n is an integer of 1 to 3).

(C-3) The nucleating agent (C) contains at least one of aliphatic carboxylic acids and derivatives thereof.

(D-1) A melt flow rate (MFR) measured in conformity to ASTM D-1238 at a measurement temperature of 230°C at a 2.16 kg load is in a range of 11 to 100 g/10 minutes.

(D-2) A crystalline melting point measured in conformity to JIS-K7121:1987 with a differential scanning calorimetry (DSC) is in a range of 140 to 155°C.

(D-3) When a main elution peak temperature determined by temperature rising elution fractionation chromatography is referred to as Tp (unit: °C), an amount Wp1 (% by mass) eluted in a higher temperature range than Tp with respect to the total elution amount at 0 to 135°C is 26.5% by mass or more.

(D-4) An amount Wp2 (% by mass) eluted at 10°C or lower, determined by temperature rising elution fractionation chromatography, is 4.0% by mass or less.

The polypropylene-based resin (D) satisfies requirements (D-1) to (D-4). The polypropylene-based resin (D) satisfies requirements (D-1) to (D-4), and it is thereby possible to form a molded article having excellent moldability and high surface smoothness.

Requirement (D-1) is that a melt flow rate (MFR) measured in conformity to ASTM D-1238 at a measurement temperature of 230°C at a 2.16 kg load is in a range of 11 to 100 g/10 minutes. Requirement (D-1) is a requirement for making mainly moldability, particularly blow moldability and surface smoothness excellent. MFR of the polypropylene-based resin (D) is preferably from 15 to 60 g/10 minutes, and more preferably from 15 to 40 g/10 minutes. When MFR of the polypropylene-based resin (D) is less than 11 g/10 minutes, uniformity of a thickness distribution of a molded article is easily reduced, resulting in difficulty in obtaining a uniformly smooth surface. When MFR of the polypropylene-based resin (D) is more than 100 g/10 minutes, blow molding is difficult. In addition, uniformity of a thickness distribution of a molded article is easily reduced, resulting in difficulty in obtaining a uniformly smooth surface. For example, MFR can be adjusted by blending an organic peroxide in the polypropylene-based resin (D). The organic peroxide is, for example, 2,5-dimethyl-2,5-di(benzoylperoxy) hexane. The blending amount of the organic peroxide is preferably 0.1 parts by mass or less, more preferably from 0 to 0.05 parts by mass, still more preferably from 0 to 0.03 parts by mass, and particularly preferably from 0 to 0.02 parts by mass with respect to 100 parts by mass of the polypropylene-based resin (D).

Requirement (D-2) is that a crystalline melting point measured in conformity to JIS-K7121:1987 with a differential scanning calorimetry (DSC) is in a range of 140 to 155°C. Requirement (D-2) is a requirement for making mainly moldability, particularly blow moldability excellent. The crystalline melting point of the polypropylene-based resin (D) is more preferably from 140 to 150°C. When a plurality of endothermic peaks of a resin is present, a maximum endothermic peak is defined as a crystalline melting point. When the crystalline melting point of the polypropylene-based resin (D) is lower than 140°C, an adhesion of a thin film is reduced. In addition, moldability including a release property from a mold die is also reduced. Furthermore, a molded article becomes sticky. When the crystalline melting point of the polypropylene-based resin (D) is higher than 155°C, an adhesion of a thin film can be secured, but moldability is reduced. In addition, transparency of a molded article and surface smoothness thereof are reduced, and therefore it is difficult to improve a gas barrier property.

Requirement (D-3) is that when a main elution peak temperature determined by temperature rising elution fractionation chromatography is referred to as Tp, an amount Wp1 (% by mass) eluted in a higher temperature range than Tp with respect to the total elution amount at 0 to 135°C is 26.5% by mass or more. Requirement (D-3) is a requirement for mainly making blow moldability excellent. Wp1 is preferably 27.0% by mass or more, and more preferably 28.0% by mass or more. When Wp1 is less than 26.5% by mass, blow moldability is reduced. As a result, surface smoothness of a molded article is insufficient, a dense thin film cannot be formed, and a gas barrier property cannot be improved. When Wp1 is too high, blow moldability and surface smoothness of a molded article may be reduced. An upper limit of Wp1 is preferably 50% by mass or less, and more preferably 40% by mass or less. Wp1 of the propylene-based resin composition is usually in a range of 5 to 26% by mass when Wp1 for each of the propylene-based resin (A) and the propylene-based resin (B) described below is measured. Wp1 of the propylene-based resin composition can be adjusted by regulating one or both of a crystalline melting point of each of the propylene-based resin (A) and the propylene-based resin (B) and a blending amount thereof. That is, by using the propylene-based resin (A) having a low crystalline melting point as a main component, assuming that a main elution peak temperature is based on the resin (A), and increasing the amount of the propylene-based resin (B) having a high crystalline melting point, Wp1 becomes larger. Here, the main elution peak temperature Tp means a temperature at which an elution amount is the largest in an elution curve.

Requirement (D-4) is that an amount Wp2 (% by mass) eluted at 10°C or lower, determined by temperature rising elution fractionation chromatography, is 4.0% by mass or less. Requirement (D-4) is a requirement for mainly making bleeding substances less. Wp2 is preferably 3.5% by mass or less, and more preferably 3.0% by mass or less. When Wp2 is more than 4.0% by mass, an influence of bleeding substances on a surface property of a molded article is large, and a dense thin film having a high gas barrier property cannot be formed. The smaller Wp2 is, the less bleeding substances tends to be. A lower limit of Wp2 is preferably 0% by mass, and more preferably 0.1% by mass. For example, Wp2 of the propylene-based resin composition can be adjusted by blending the specific nucleating agent (C) or controlling a crystalline melting point of the propylene-based resin (A) described below. As a guide, blending the specific nucleating agent (C) or raising the crystalline melting point of the propylene-based resin (A) described below reduces Wp2.

Here, the polypropylene-based resin (D) includes a propylene homopolymer and a copolymer mainly containing propylene. The copolymer mainly containing propylene is, for example, a copolymer of propylene, and one or more olefins selected from the group consisting of ethylene and α-olefins having 4 to 20 carbon atoms. The polypropylene-based resin composition may contain only one kind of the polypropylene-based resin (D) or two or more kinds thereof. When the polypropylene-based resin composition contains two or more kinds of polypropylene-based resins as the polypropylene-based resin (D), the mixture of the two or more kinds of polypropylene-based resins satisfies requirements (D-1) to (D-4).

In the coated polypropylene-based molded article according to the present embodiment, the polypropylene-based resin composition includes the polypropylene-based resin (A) satisfying requirements (A-1) and (A-2) and the polypropylene-based resin (B) satisfying requirements (B-1) and (B-2) as the polypropylene-based resin (D), and the content of the polypropylene-based resin (A) is from 1 to 99 parts by mass with respect to 100 parts by mass of the total mass of the polypropylene-based resin (A) and the polypropylene-based resin (B). The content is preferably from 60 to 98 parts by mass, more preferably from 70 to 98 parts by mass, and still more preferably from 80 to 98 parts by mass. By the polypropylene-based resin composition includes the polypropylene-based resin (A) and the polypropylene-based resin (B) as the polypropylene-based resin (D), it is possible to impart high moldability in various molding methods including blow molding, and suppress shrinkage of a polypropylene-based molded article due to a heat load.

Requirement (A-1) is that the polypropylene-based resin (A) is a copolymer of propylene, and one or more olefins selected from the group consisting of ethylene and α-olefins having 4 to 20 carbon atoms. The α-olefins having 4 to 20 carbon atoms is, for example, 1-butene, 1-pentene, 1-hexene, 1-heptene, 1-octene, 4-methyl-1-pentene, 1-decene, 1-dodecene, 1-tetradodecene, 1-hexadodecene, 1-octadodecene, 1-eicosene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-octene, or methyl-1-nonene. Among these olefins, the polypropylene-based resin (A) is more preferably a copolymer of propylene and ethylene from a viewpoint of moldability. When the polypropylene-based resin (A) is a copolymer of propylene and ethylene, the content of ethylene in the copolymer is preferably from 1.9 to 5.5% by mass, more preferably from 2.0 to 4.8% by mass, and still more preferably from 3.0 to 4.0% by mass.

Requirement (A-2) is that a crystalline melting point measured in conformity to JIS-K7121:1987 with a differential scanning calorimetry (DSC) is in a range of 130 to 150°C, preferably from 130 to 145°C, more preferably from 132 to 145°C, still more preferably from 135 to 145°C, and particularly preferably from 136 to 145°C. High moldability including blow molding can be imparted, and in addition, a molded article having a transparent and smooth surface is easily obtained. The crystalline melting point can be adj usted by an ethylene content or a content of an α-olefin having 4 to 20 carbon atoms with respect to a propylene content. In order to obtain the above crystalline melting point, it is necessary to take a preferable ethylene content, the kind or a content of an α-olefin having 4 to 20 carbon atoms, or a relation to MFR, a molecular weight distribution, or the like into consideration. However, in the propylene-based resin (A), the ethylene content is preferably from 1.9 to 5.4% by mass, more preferably from 2.0 to 4.8% by mass, and still more preferably from 3.0 to 4.0% by mass.

Requirement (B-1) is that the polypropylene-based resin (B) is a propylene homopolymer or a copolymer of propylene, and one or more olefins selected from the group consisting of ethylene and α-olefins having 4 to 20 carbon atoms. Examples of the α-olefins having 4 to 20 carbon atoms are similar to those exemplified in requirement (A-1). Among these olefins, the polypropylene-based resin (B) is more preferably a copolymer of propylene and ethylene, or a propylene homopolymer from a viewpoint of blow moldability.

Requirement (B-2) is that a crystalline melting point measured in conformity to JIS-K7121:1987 with a differential scanning calorimetry (DSC) is in a range of 151 to 165°C, preferably from 155 to 165°C, and more preferably from 158 to 165°C. Moldability including a uniform thickness distribution can be enhanced, resulting in easiness in obtaining a uniformly smooth surface of a molded article. Furthermore, shrinkage of a molded article due to a heat load can be suppressed.

The polypropylene-based resin (D) may include no modified low-molecular olefin-based modifier (X), or may be compatibilized by addition of the modified low-molecular olefin-based modifier (X). The modified low-molecular olefin-based modifier (X) is a modified low-molecular olefin-based modifier described in Patent Literature 2. Specifically, the modified low-molecular olefin-based modifier (X) is a primary acid-modified product (Y1) of a polyolefin (X1) containing 85 to 99.9% by mol of propylene and 15 to 0.1% by mol of ethylene as constituent units, or a primary acid-modified product (Y2) of a polyolefin (X2) containing 85 to 99.9% by mol of propylene, 0.1 to 15% by mol of ethylene, and more than 0% by mol and 14% by mol or less of an α-olefin having 4 to 12 carbon atoms (x) as constituent units. An addition amount of the modified low-molecular olefin-based modifier (X) is preferably from 0.1 to 30% by mass with respect to the total amount of the polypropylene-based resin (D) and the modified low-molecular olefin-based modifier (X). By compatibilizing the modified low-molecular olefin-based modifier (X) by addition thereof to the polypropylene-based resin (D), a functional group suitable for an adhesion of a thin film is introduced not only into a surface of a resin composition but also inside the resin composition. The resulting resin composition is formed into a molded article such as a container or a film, and then a functional thin film is formed on a surface thereof. At this time, the functional group has been uniformly introduced in a high concentration at a nanoscale. Therefore, the thin film adheres to the molded article, and a function thereof is exhibited sufficiently.

Examples of the α-olefin (x) having 4 to 12 carbon atoms include 1-butene, 1-pentene, 1-hexene, 1-heptene, 1-octene, 4-methyl-1-pentene, 1-decene, 1-dodecene, 1-tetradecene, 1-hexadecene, or 1-octadecene. Among these olefins, 1-hexene or 1-octene are preferable, 1-butene, 1-pentene, or 4-methyl-1-pentene are more preferable, and 1-butene is particularly preferable from a viewpoint of an adhesion between a polyolefin resin and a gas barrier thin film such as a carbon film.

The polyolefin primary acid-modified product (Y1) or (Y2) is preferably an acid-modified product modified with an unsaturated carboxylic acid or an acid anhydride thereof (y). Examples of the unsaturated polycarboxylic acid include a dicarboxylic acid [for example, aliphatic (C4 to 24, for example maleic acid, fumaric acid, itaconic acid, citraconic acid, or mesaconic acid), or alicyclic (C8 to 24, for example, cyclohexene dicarboxylic acid or cycloheptene dicarboxylic acid)] ; a trivalent, tetravalent, or higher polycarboxylic acid [for example, aliphatic polycarboxylic acid (C5 to 24, for example, aconitic acid)]; or a mixture of two or more kinds thereof. Examples of the acid anhydride of an unsaturated polycarboxylic acid include anhydrides of the above unsaturated polycarboxylic acids such as maleic anhydride, itaconic anhydride, citraconic anhydride, cyclohexene dicarboxylic acid anhydride, or aconitic acid. The unsaturated carboxylic acid or the acid anhydride thereof (y) may be used singly or in combination of two or more kinds thereof. Among these compounds, an unsaturated dicarboxylic acid anhydride is preferable, and maleic anhydride is more preferable from a viewpoint of an adhesion and industry.

As a modifier added to the polypropylene-based resin (D) for compatibilizing, another known additive such as a hydrogenated petroleum resin can be used. The additive preferably contains a cyclic structure or a polar group. For example, by adding I-MARV P-125 (trade name) manufactured by Idemitsu Kosan Co. Ltd. , transparency and rigidity of a molded article can be improved, and further an adhesion of a thin film and a barrier property thereof can be improved.

The nucleating agent (C) satisfies requirements (C-1) to (C-3). The nucleating agent (C) satisfies requirements (C-1) to (C-3), and it is thereby possible to form a highly transparent molded article having a small container shrinkage after a heat treatment such as hot-pack filling (for example, 85°C or higher), boiling sterilization, or microwave heating.

Requirement (C-1) is that the nucleating agent (C) contains an alkali metal element. Requirement (C-1) is a requirement for mainly forming many crystal nuclei and suppressing growth thereof, resulting in further improving transparency. As the alkali metal element, lithium, sodium, or potassium is preferable, and lithium is particularly preferable. The alkali metal may be derived from the compounds shown in (C-2), or may be derived from the compounds defined by (C-3).

Requirement (C-2) is that the nucleating agent (C) contains an organic phosphoric acid ester compound represented by general formula (chemical formula 1). Requirement (C-2) is a requirement for mainly forming many crystal nuclei and suppressing growth thereof, resulting in further improving transparency. 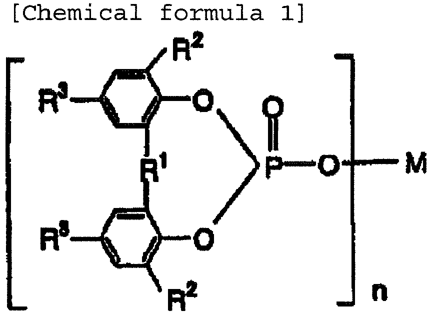 (In (chemical formula 1), R1 is a divalent hydrocarbon group having 1 to 10 carbon atoms, R2 and R3 are each hydrogen or a hydrocarbon group having 1 to 10 carbon atoms, R2 and R3 may be the same as or different from each other, M is an n-valent metal atom, and n is an integer of 1 to 3).

In general formula (chemical formula 1), R1 represents a divalent hydrocarbon group having 1 to 10 carbon atoms. The divalent hydrocarbon group having 1 to 10 carbon atoms is, for example, a methylene group, an ethylidene group, a propylidene group, or a butylidene group. In addition, R2 and R3 are each a hydrogen atom or an alkyl group having 1 to 4 carbon atoms. The alkyl group having 1 to 4 carbon atoms is, for example, a methyl group, an ethyl group, a propyl group, an isopropyl group, a butyl group, an isobutyl group, a secondary butyl group, or a tertiary butyl group. R2 and R3 may be the same as or different from each other. R2 and R3 are preferably the same as each other. In general formula (chemical formula 1), M is an n-valent metal atom. M is, for example, an alkali metal element such as lithium, sodium, or potassium, a periodic table group 2 metal element such as magnesium, calcium, or barium, or a periodic table group 13 metal element such as aluminum. Among these metal elements, an alkali metal element is preferable, sodium or lithium is more preferable, and lithium is particularly preferable. When M is a monovalent metal element, examples thereof include an alkali metal element such as lithium, sodium, or potassium, or a monovalent copper. In general formula (chemical formula 1), n is an integer of 1 to 3. The nucleating agent (C) may contain only a single organic phosphoric acid ester compound represented by general formula (chemical formula 1) or two or more kinds thereof.

Requirement (C-3) is that the nucleating agent (C) contains at least one of aliphatic carboxylic acids and derivatives thereof. Requirement (C-3) is a requirement for mainly making dispersibility of the organic phosphoric acid ester compound represented by general formula (chemical formula 1) excellent. The derivative of an aliphatic carboxylic acid is preferably a hydroxy group-substituted derivative of an aliphatic carboxylic acid. The hydroxy group-substituted derivative of an aliphatic carboxylic acid is, for example, 12-hydroxystearic acid. The aliphatic carboxylic acid or the derivative thereof may form a metal salt with the metal M. As the aliphatic carboxylic acid and the derivative thereof, an aliphatic monocarboxylic acid having 14 to 20 carbon atoms and a derivative thereof is preferable, and stearic acid or 12-hydroxystearic acid is particularly preferable. Requirement (C-3) includes a form in which the nucleating agent (C) contains only an aliphatic carboxylic acid, a form in which the nucleating agent (C) contains only a derivative of an aliphatic carboxylic acid, and a form in which the nucleating agent (C) contains both an aliphatic carboxylic acid and a derivative thereof. A clear melting point of an aliphatic carboxylic acid or a derivative thereof is preferably higher than 100°C, and more preferably higher than 110°C. When the clear melting point is 100°C or lower, heat resistance as an advantage of a polypropylene-based molded article is not available easily in some cases. For example, when food or a beverage in a container is boiled and sterilized, a problem due to reduction in transparency of the container or elution may occur. A method for measuring the clear melting point is in conformity to JIS-K0064:1992 "Test methods for melting point and melting range of chemical products".

The aliphatic carboxylic acid is, for example, acetic acid, propionic acid, lactic acid, butyric acid, valeric acid, caproic acid, 2-ethylhexanoic acid, enanthic acid, pelargonic acid, caprylic acid, neodecyl acid, undecyl acid, lauric acid, tridecyl acid, myristic acid, pentadecyl acid, palmitic acid, margaric acid, stearic acid, nonadecyl acid, arachidic acid, behenic acid, lignoceric acid, cerotic acid, montanic acid, melissic acid, obtusilic acid, linderic acid, tsuzuic acid, palmitoleic acid, myristoleic acid, petroselinic acid, oleic acid, elaidic acid, vaccenic acid, linoleic acid, linoelaidic acid, γ-linolenic acid, linolenic acid, ricinoleic acid, naphthenic acid, abietic acid, hydroxyacetic acid, lactic acid, β-hydroxy propionic acid, 2-methyl-β-hydroxypropionic acid, α-hydroxybutyric acid, β-hydroxybutyric acid, γ-hydroxybutyric acid, monomethylol propionic acid, dimethylol propionic acid, or 12-hydroxystearic acid. The derivative of an aliphatic carboxylic acid may be, for example, a metal salt of the above aliphatic carboxylic acid. Metal species of the metal salt of an aliphatic carboxylic acid is, for example, an alkali metal element such as lithium, sodium, or potassium, a periodic table group 2 metal element such as magnesium, calcium, or barium, or a periodic table group 13 metal element such as aluminum. Among these metal elements, an alkali metal element is preferable, sodium or lithium is more preferable, and lithium is particularly preferable. The nucleating agent (C) may contain only a single aliphatic carboxylic acid or a derivative thereof, or two or more kinds thereof.

As the nucleating agent (C), a compound represented by general formula (chemical formula 1) is used from a viewpoint of suppressing bleeding. As a nucleating agent satisfying requirements (C-1) to (C-3), a commercially available product may be used. Examples of a nucleating agent containing (lithium-(2,2'-methylene-bis(4,6-di-t-butylphenyl) phosphate and 12-hydroxystearic acid and containing lithium as an essential component include Adekastab NA71 (trade name) manufactured by ADEKA Corporation. Examples of a nucleating agent containing (sodium-(2,2'-methylene-bis(4,6-di-t-butylphenyl) phosphate and myristic acid and containing sodium as an essential component include Adekastab NA21 (trade name) manufactured by ADEKA Corporation.

In the polypropylene-based resin composition, the content of the nucleating agent (C) is from 0.05 to 0.5 parts by mass with respect to 100 parts by mass of the polypropylene-based resin (D). The content of the nucleating agent (C) is more preferably from 0.05 to 0.3 parts by mass with respect to 100 parts by mass of the polypropylene-based resin (D). When the content of the nucleating agent (C) is less than 0.05 parts by mass with respect to 100 parts by mass of the polypropylene-based resin (D), transparency of a molded article cannot be improved. When the content of the nucleating agent (C) is more than 0.5 parts by mass with respect to 100 parts by mass of the polypropylene-based resin (D), moldability and an economic efficiency is reduced.

An additive may be blended in the polypropylene-based resin composition in addition to the nucleating agent (C) and the polypropylene-based resin (D), if necessary. In the polypropylene-based resin composition, the total content of 2,6-di-tert-butyl-4-methylphenol (BHT) and calcium stearate as an additive is preferably 0.1 parts by mass or less with respect to 100 parts by mass of the polypropylene-based resin (D). The content is more preferably zero. An additive which can be used is, for example, an antioxidant such as a phenol-based, phosphorus-based or sulfur-based antioxidant; a light stabilizer such as HALS (hindered amine light stabilizers) or an ultraviolet absorber; a lubricant such as a hydrocarbon-based, fatty acid-based, aliphatic alcohol-based, aliphatic ester-based, aliphatic amide-based, or metal soap-based lubricant; a heavy metal deactivator; an antifogging agent; an antistatic agent such as a cationic surfactant, an anionic surfactant, a nonionic surfactant, or an amphoteric surfactant; a halogen compound; a phosphate compound; a phosphoric amide compound; a melamine compound; a fluorine resin or a metal oxide; a flame retardant such as (poly) melamine phosphate or (poly) piperazine phosphate; a filler such as glass fiber or calcium carbonate; a pigment; a silicate-based inorganic additive such as hydrotalcite, fumed silica, fine silica, silicate stone, a diatomaceous earth compound, clay, kaolin, diatomaceous earth, silica gel, calcium silicate, sericite, kaolinite, flint, feldspar powder, vermiculite, attapulgite, talc, mica, minnesotaite, pyrophyllite, or silica; and a crystal nucleating agent such as dibenzylidene sorbitol, bis(p-methyl benzylidene) sorbitol, bis (p-ethyl benzylidene) sorbitol, or 2 sodium bicyclo [2.2.1] heptane-2,3-dicarboxylate. An additive may be blended in the nucleating agent (C), blended in the polypropylene-based resin (D), or blended in both the nucleating agent (C) and the polypropylene-based resin (D). When an additive is used, the content of the additive is preferably 20% by mass or less, and more preferably 8% by mass or less with respect to the total mass of the polypropylene-based resin composition.

The polypropylene-based molded article is, for example, a container such as a bottle, a lid of a container such as a cap, a film, a sheet, or a tray. The polypropylene-based molded article is preferably a container. By the polypropylene-based resin composition includes the polypropylene-based resin (D) and the nucleating agent (C) satisfying a specific requirement, excellent transparency after molding can be maintained. The thickness of the polypropylene-based molded article is not particularly limited. For example, when the polypropylene-based molded article is a container, an average thickness of a body thereof is preferably from 200 to 800 µm, and more preferably from 250 to 600 µm. The polypropylene-based molded article has been preferably subjected to a stretching treatment. Transparency is further improved. In addition, a surface of a molded article having a less bleeding substances is easily obtained, and it is easy to improve a gas barrier property.

A thin film is formed on a part or the whole of a surface of the polypropylene-based molded article. When the polypropylene-based molded article is a container, a thin film is formed on one or both of an inner surface and an outer surface of the container. When the polypropylene-based molded article is a film, a thin film is formed on one or both of a front surface and a back surface of the film.

In the coated polypropylene-based molded article according to the present embodiment, a part or the whole of a thin film is preferably any one of a carbon film, a SiOx film, a SiOC film, a metal oxide film, and a metal nitride film. By disposing a carbon film, a SiOx film, a metal oxide film, or a metal nitride film, a molded article having an excellent gas barrier property can be obtained. The carbon film is, for example, a diamond-like carbon (DLC) film. The metal oxide film is, for example, an aluminum oxide film. The metal nitride film is, for example, an aluminum nitride film. The thin film may be a composite film or a multilayer film in addition to a monolayer film. The thickness of the thin film is not particularly limited, but is preferably from 5 to 100 nm, and more preferably from 10 to 50 nm.

In the coated polypropylene-based molded article according to the present embodiment, an oxygen permeability of the coated polypropylene-based molded article is preferably one tenth or less of an oxygen permeability of a polypropylene-based molded article not coated with a thin film. The oxygen permeability is more preferably one twentieth or less. By the polypropylene-based resin composition includes the polypropylene-based resin (D) and the nucleating agent (C) satisfying a specific requirement, a dense thin film having an excellent adhesion can be formed, and therefore a gas barrier property of a molded article having a thin film formed can be enhanced. In a case of a container for food and beverages, sufficient quality retention performance can be imparted to most of the food and beverage applications, for example, filled in a typical polyethylene terephthalate container.

Next, a method for manufacturing a coated polypropylene-based molded article will be described. The method for manufacturing a coated polypropylene-based molded article according to the present embodiment includes a molding step for heating a composition including the polypropylene-based resin (D) satisfying requirements (D-1) to (D-4) and the nucleating agent (C) satisfying requirements (C-1) to (C-3) and a content of the nucleating agent (C) is from 0.05 to 0.5 parts by mass with respect to 100 parts by mass of the polypropylene-based resin (D) and subjecting the composition to a stretching treatment to obtain a molded article, and a film-forming step for forming a thin film on at least a part of a smooth surface of the molded article obtained by the stretching treatment.

In the molding step, a known molding method can be used. When the polypropylene-based molded article is a container, the known molding method is, for example, a direct blow molding method, an injection stretch blow molding method, an extrusion stretch blow molding method, or a sheet blow molding method. When the polypropylene-based molded article is a film, the known molding method is, for example, a biaxially stretching method or a pressure molding method. In the present embodiment, the polypropylene-based molded article is more preferably a hollow container obtained by blow molding.

In the film-forming step, a known film-forming method can be used. The known film-forming method is, for example, a chemical vapor deposition (CVD) method such as a plasma CVD method or a heating element CVD method, or a physical vapor deposition (PVD) method such as a vacuum deposition method, a sputtering method, or an ion plating method. Here, the heating element CVD method means a CVD method referred to as a heating element CVD method, a Cat-CVD method, or a hot-wire CVD method.

The method for manufacturing a coated polypropylene-based molded article according to the present embodiment preferably includes a removing step for removing bleeding substances on a surface on which a thin film will be formed between the stretching treatment step and the thin film coating treatment step. The polypropylene-based resin (D) is a resin in which bleeding is suppressed, but bleeding may occur slightly. Therefore, by performing the removing step, surface smoothness of a surface on which a thin film will be formed can be enhanced, and a denser thin film having a better adhesion can be formed. As a result, the gas barrier property of a molded article having a thin film formed can be further improved.

It is preferable that the removing step is a step which performs a plasma treatment using a gas mainly containing a single gas selected from oxygen, nitrogen, hydrogen, helium, and argon or a mixed gas thereof. Specifically, a nitrogen plasma treatment, an oxygen plasma treatment, or a nitrogen-oxygen plasma treatment is more preferable. By performing the plasma treatment, surface smoothness of a surface on which a thin film will be formed can be enhanced, the surface can be activated, and an adhesion of the thin film can be further improved. As a result, the gas barrier property of a molded article having a thin film formed can be further improved.

The removing step may be a step which use a hydrogen radical generated by the heating element CVD method. When a thin film is formed by the heating element CVD method, the removing step can be performed more efficiently. By the hydrogen radical, surface smoothness of a surface on which a thin film will be formed can be enhanced, the surface can be activated, and an adhesion of the thin film can be further improved. As a result, the gas barrier property of a molded article having a thin film formed can be further improved.

### Examples

Next, the present invention will be described by using Examples of the present invention, but the present invention is not limited to Examples.

### (Manufacturing polypropylene-based resin)

### [Synthesis Example 1: manufacturing polypropylene-based resin (hereinafter, also referred to as propylene-based resin) (A2)]

### (1) Preparation of solid catalyst component

A heating reaction was performed at 130°C for two hours using 95.2 g of anhydrous magnesium chloride, 442 ml of decane, and 390.6 g of 2-ethylhexyl alcohol to obtain a homogeneous solution. Thereafter, 21.3 g of phthalic anhydride was added to this solution. Furthermore, the resulting mixture was stirred and mixed at 130°C for one hour, and phthalic anhydride was dissolved therein. The homogeneous solution obtained in this way was cooled to room temperature. Thereafter, 75 ml of the homogeneous solution was dropwise added to 200 ml of titanium tetrachloride maintained at -20°C over one hour. After adding was completed, the temperature of this mixed solution was raised to 110°C over four hours. When the temperature reached 110°C, 5.22 g of diisobutyl phthalate (DIBP) was added thereto. The resulting mixture was stirred and the temperature thereof was maintained at this temperature for two hours from this time on. After the reaction for two hours was completed, a solid was collected by heat filtration, then was resuspended in 275 ml of titanium tetrachloride, and then was heated at 110°C for two hours again. After the reaction was completed, a solid was collected by heat filtration again, and was washed sufficiently with decane and hexane at 110°C until a free titanium compound became undetectable in the solution. The solid after washing was referred to as a solid titanium catalyst component (A). The solid titanium catalyst component (A) was stored as a decane slurry, but a part thereof was dried in order to examine a composition of the catalyst. The composition of the solid titanium catalyst component (A) was titanium: 2.3% by mass, chlorine: 61% by mass, magnesium: 19% by mass, andDIBP: 12.5% by mass. The free titanium compound was detected by the following method. 10 ml of a supernatant of the solid catalyst component was collected with a syringe and was put into a 100 ml branched Schlenk which had been subjected to nitrogen replacement in advance. Subsequently, hexane as a solvent was dried in a nitrogen stream, and was further dried under vacuum for 30 minutes. 40 ml of ion-exchanged water and 10 ml of 50% by volume sulfuric acid were added thereto, and the resulting mixture was stirred for 30 minutes. This aqueous solution was transferred to a 100 ml measuring flask through filter paper. Subsequently, 1 ml of conc. H₃PO₄ as a masking agent for an iron (II) ion and 5 ml of a 3% H₂O₂ aqueous solution as a chromogenic reagent of titanium were added thereto. The resulting solution was further diluted to 100 ml with ion-exchanged water. This measuring flask was shaken. After 20 minutes, an absorbance was measured at 420 nm using UV, and free titanium was detected. The free titanium was washed, removed, and detected until this absorption was not observed.

### (2) Preparation of preliminary polymerization catalyst component

A three-necked flask equipped with a stirrer and having an inner volume of 500 ml was replaced with nitrogen gas. Thereafter, 400 ml of dehydrated heptane, 19.2 mmol of triethyl aluminum, 3.8 mmol of dicyclopentyl dimethoxysilane, and 4 g of the solid titanium catalyst component (A) were added thereto. Propylene gas was continuously introduced thereinto at a rate of 8 g/hr while the internal temperature was maintained at 20°C and stirring was performed. After one hour, stirring was stopped. As a result, a preliminary polymerization catalyst component (B) obtained by polymerization of 2 g of propylene with respect to 1 g of the solid titanium catalyst component (A) was obtained.

### (3) Polymerization

A stainless steel autoclave equipped with a stirrer and having an inner volume of 10 L was dried sufficiently, and was replaced with nitrogen. Thereafter, 6 L of dehydrated heptane, 12.5 mmol of triethyl aluminum, and 0.6 mmol of dicyclopentyl dimethoxysilane were added thereto. Nitrogen in the system was replaced with propylene. Thereafter, 0.55 MPa-G of hydrogen was added thereto (*1), and subsequently propylene and ethylene were introduced thereinto while being stirred. An introduction amount was adjusted such that the ethylene concentration (*2) of a gas phase in a polymerization tank was 1.4% by mol. After the inside of the system was stabilized at an internal temperature of 80°C at a total pressure of 1.1 MPa-G (*3), 20.8 ml of heptane slurry containing 0.10 mmol of the preliminary polymerization catalyst component (B) in terms of Ti atom was added to the system. Polymerization was performed at 80°C for three hours while propylene and ethylene were continuously supplied so as to maintain the total pressure and the ethylene concentration. When a predetermined time passed, 50 ml of methanol was added, the reaction was stopped, and the temperature and the pressure were lowered. All of the contents were transferred to a filtration tank with a filter, and the temperature was raised to 60°C for solid-liquid separation. Furthermore, the solid was washed with 6 L of heptane at 60°C twice. A propylene-ethylene copolymer (propylene-based resin (A2)) obtained in this way was dried under vacuum. The melt flow rate (MFR) of the resulting propylene-based resin (A2) (ASTM D-1238, measurement temperature: 230°C, load: 2.16 kg) was 30.0 g/10 minutes. The mass of a constituent unit derived from ethylene was 3.4% by mass with respect to 100% by mass of the total of a constituent unit derived from propylene and the constituent unit derived from ethylene, calculated by 13C-NMR. A DSC melting point (in conformity to JIS-K7121: 1987, crystalline melting point measured by DSC) was 142°C.

### [Synthesis Examples 2 to 7]

Propylene-based resins A1, A3 and A4, and propylene-resins B1, B2 and B3 were obtained in a similar manner to Synthesis Example 1 except that the polymerization conditions, *1: an addition amount of hydrogen to a polymerization tank, *2: an ethylene concentration of a gas phase in a polymerization tank, and *3: internal temperature and total pressure in a system after stabilization were changed as indicated in Table 1 in Synthesis Example 1.

### (Example 1)

### (Manufacturing polypropylene-based resin composition)

A polypropylene-based resin (D1) was formed of a mixture of 95 parts by mass of the polypropylene-based resin (A2) which was a copolymer of propylene and ethylene and had a crystalline melting point measured in conformity to JIS-K7121:1987 with a differential scanning calorimetry (DSC) of 142°C, and 5 parts by mass of the polypropylene-based resin (B2) which was a copolymer of propylene and ethylene and had a crystalline melting point measured in conformity to JIS-K7121:1987 with a differential scanning calorimetry (DSC) of 162°C. Here, 0.10 parts by mass of tris(2,4-di-t-butylphenyl) phosphate as a phosphorus antioxidant and a 0.04 parts by mass of hydrotalcite as a neutralizer were added to the polypropylene-based resin (D1). To 100 parts by mass of the polypropylene-based resin (D1), 0.15 parts by mass of Adekastab NA-71 (manufactured by ADEKA Corporation) as the nucleating agent (C1) was added and mixed. Thereafter, the resulting mixture was supplied to a twin-screw extruder having a screw diameter of 30 mm and L/D (screw diameter/screw length) = 42, and was melted and kneaded under conditions of a rotation speed of 250 rpm and a set temperature of 200 to 220°C to obtain a polypropylene-based resin composition. Here, Table 2 indicates a blending resin and an oxide in the polypropylene-based resin (D1), MFR, a crystalline melting point, Wp1 and Wp2, and blending of a nucleating agent.

### (Manufacturing bottle)

A 500 ml bottle having a mass of 18.4 g was molded using the resulting polypropylene-based resin composition by a cold parison method. The average thickness of a body portion was 360 µm.

### (Formation of thin film)

A removing step with respect to an inner surface of the bottle and a step for forming a DLC film were performed using a method similar to a method for forming a DLC film on an inner surface of a bottle, disclosed in JP 8-53117 A. At this time, the inside and outside of the bottle was evacuated to 5 Pa using a DLC film-forming apparatus (PNS-1, manufactured by UTEC Corporation). Thereafter, a plasma was generated for one second at an air flow rate of 80 sccm as a removing step, and then a plasma was generated for three seconds at an acetylene gas flow rate of 80 sccm as a film-forming step. An output 2000 W at a high frequency of 13.56 MHz was used for generating a plasma. All the thicknesses of the DLC film were 30 nm. Kinds of the removing step are indicated in Table 2.

### (Examples 2 to 16)

A bottle-shaped coated polypropylene-based molded article was obtained in a similar manner to Example 1 except that the kind of a gas used for the plasma treatment in the removing step and/or the kind of a thin film were/was changed. Table 2 indicates the kind of a gas and/or the kind of a thin film. Each of a SiOx thin film, an AlOx thin film, and a SiOC thin film was formed on an inner surface of a bottle using a method similar to a method for forming a film on an inner surface of a container, disclosed in JP 2008-127053 A. When the thin film was a SiOx film, an iridium wire was used as a wire, and trimethylsilane was supplied at 1.5 sccm as a raw material gas. Ozone was diluted with oxygen to 10% to obtain a mixed gas, and the mixed gas was supplied at 100 sccm. A distance between the wire and an inner bottom surface of the bottle was 30 mm. A distance between the wire and an inner side surface of the bottle was about 30 mm. A DC current was applied to the iridium wire to obtain a hot wire at 800°C. The pressure in a vacuum chamber during film formation was 20 Pa. Time for film formation was 15 seconds. When the thin film was an AlOx film, the film was formed in a similar manner to the SiOx film except that the raw material gas was changed to dimethyl aluminum isopropoxide. When the thin film was a SiOC film, the film was formed in a similar manner to the SiOx film except that the raw material gas was changed to vinylsilane.

### (Example 17)

A bottle-shaped coated polypropylene-based molded article was obtained in a similar manner to Example 1 except that the removing step was changed to a step using a hydrogen radical generated by a heating element CVD method and the kind of the thin film was changed. Table 2 indicates the kind of the thin film.

### (Example 18)

### (Manufacturing polypropylene-based resin composition)

100 parts by mass of the polypropylene-based resin (D1), 0. 15 parts by mass of the nucleating agent (C1), and 1.0 part by mass of the modified low-molecular olef in-based modifier (X) were mixed. Thereafter, the resulting mixture was supplied to a twin-screw extruder having a screw diameter of 30 mm and L/D (screw diameter/screw length) = 42, and was melted and kneaded under conditions of a rotation speed of 250 rpm and a set temperature of 200 to 220°C to obtain a polypropylene-based resin composition. A bottle-shaped coated polypropylene-based molded article was obtained in a similar manner to Example 1 except that this polypropylene-based resin composition was used. As the modified low-molecular olefin-based modifier (X), a resin material obtained by grafting a polyolefin (number average molecular weight in olefin portion: 4500) having 90% by mol of propylene, 5% by mol of ethylene, and 5% by mol of 1-butene as constituent units with maleic anhydride was manufactured. A molar ratio between polyolefin and maleic anhydride was 99/1. The blending amount of the modifier is indicated in Table 2.

### (Examples 19 to 24)

A bottle-shaped coated polypropylene-based molded article was obtained in a similar manner to Example 18 except that the kind of a gas used for the plasma treatment in the removing step and/or the kind of a thin film were/was changed. A film-forming method was similar to Examples 1 to 17.

### (Example 25)

A bottle-shaped coated polypropylene-based molded article was obtained in a similar manner to Example 1 except that 100 parts by mass of the polypropylene-based resin (D1) and 0.05 parts by mass of the nucleating agent (C1) were mixed.

### (Example 26)

A bottle-shaped coated polypropylene-based molded article was obtained in a similar manner to Example 1 except that 100 parts by mass of the polypropylene-based resin (D1) and 0.5 parts by mass of the nucleating agent (C1) were mixed.

### (Example 27)

A polypropylene-based resin (D2) was formed of a mixture of 98 parts by mass of the propylene-based resin (A2) which was a copolymer of propylene and ethylene and had a crystalline melting point measured in conformity to JIS-K7121:1987 with a differential scanning calorimetry (DSC) of 142°C, and 2 parts by mass of the polypropylene-based resin (B2) which was a copolymer of propylene and ethylene and had a crystalline melting point measured in conformity to JIS-K7121:1987 with a differential scanning calorimetry (DSC) of 162°C. A bottle-shaped coated polypropylene-based molded article was obtained in a similar manner to Example 1 except that 0.15 parts by mass of Adekastab NA-21 (manufactured by ADEKA Corporation) was used as a nucleating agent (C2) with respect to the polypropylene-based resin (D2).

### (Example 28)

A bottle-shaped coated polypropylene-based molded article was obtained in a similar manner to Example 1 except that a polypropylene-based resin (D3) was formed of a mixture of 60 parts by mass of the propylene-based resin (A1) which was a copolymer of propylene, ethylene, and 1-hexene and had a crystalline melting point measured in conformity to JIS-K7121:1987 with a differential scanning calorimetry (DSC) of 150°C, and 40 parts by mass of the propylene-based resin (B1) which was a propylene single substance and had a crystalline melting point measured in conformity to JIS-K7121:1987 with a differential scanning calorimetry (DSC) of 165°C, and the blending amount of the nucleating agent was changed to 0.5 parts by mass.

### (Example 29)

A bottle-shaped coated polypropylene-based molded article was obtained in a similar manner to Example 1 except that a polypropylene-based resin (D4) was formed of a mixture of 60 parts by mass of the propylene-based resin (A3) which was a copolymer of propylene and ethylene and had a crystalline melting point measured in conformity to JIS-K7121:1987 with a differential scanning calorimetry (DSC) of 136°C, and 40 parts by mass of the propylene-based resin (B3) which was a copolymer of propylene and ethylene and had a crystalline melting point measured in conformity to JIS-K7121:1987 with a differential scanning calorimetry (DSC) of 151°C.

### (Example 30)

A bottle-shaped coated polypropylene-based molded article was obtained in a similar manner to Example 1 except that 0.005 parts by mass of 2,5-dimethyl-2,5-di (benzoyl peroxy) hexane was added as an organic peroxide with respect to 100 parts by mass of the polypropylene-based resin (D1).

### (Example 31)

A bottle-shaped coated polypropylene-based molded article was obtained in a similar manner to Example 1 except that 0. 04 parts by mass of 2, 5-dimethyl-2, 5-di (benzoyl peroxy) hexane was added as an organic peroxide with respect to 100 parts by mass of the polypropylene-based resin (D1).

### (Example 32)

A bottle-shaped coated polypropylene molded article was obtained in a similar manner to Example 7 except that 0.15 parts by mass of the nucleating agent (C1) and 5.0 parts by mass of I-MARV P-125 (manufactured by Idemitsu Kosan Co. Ltd.) as a modifier were added and mixed with respect to 100 parts by mass of the polypropylene-based resin (D1), and then the resulting mixture was supplied to a twin-screw extruder.

### (Comparative Example 1)

A bottle-shaped coated polypropylene-based molded article was obtained in a similar manner to Example 1 except that a polypropylene-based resin (D5) was formed of 100 parts by mass of the propylene-based resin (B2) which was a copolymer of propylene and ethylene and had a crystalline melting point measured in conformity to JIS-K7121:1987 with a differential scanning calorimetry (DSC) of 162°C, and the kind of a gas used for the plasma treatment in the removing step was changed to N₂.

### (Comparative Example 2)

A bottle-shaped coated polypropylene-based molded article was obtained in a similar manner to Comparative Example 1 except that the kind of a gas used for the plasma treatment in the removing step was changed to O₂.

### (Comparative Example 3)

A bottle-shaped coated polypropylene-based molded article was obtained in a similar manner to Comparative Example 1 except that the removing step was not performed.

### (Comparative Example 4)

A bottle-shaped coated polypropylene-based molded article was obtained in a similar manner to Comparative Example 1 except that the time for film formation was 10 seconds and the thickness of the thin film was 100 nm.

### (Comparative Example 5)

A bottle was obtained in a similar manner to Comparative Example 1 except that neither the removing step nor the film-forming step was performed.

### (Comparative Example 6)

A bottle was obtained in a similar manner to Comparative Example 1 except that 1.0 part by mass of the modified low-molecular olefin-based modifier (X) was added to the polypropylene-based resin (D5) and the removing step was not performed.

### (Comparative Example 7)

A bottle-shaped coated polypropylene-based molded article was obtained in a similar manner to Example 1 except that 0.20 parts by mass of Gel All MD (manufactured by New Japan Chemical Co., Ltd.) mainly containing 1,3,2,4-di-(p-methylbenzylidene) sorbitol not corresponding to an organic phosphoric acid ester compound represented by general formula (chemical formula 1) was used as a nucleating agent (C3) in place of the nucleating agent (C1).

### (Comparative Example 8)

A bottle was obtained in a similar manner to Comparative Example 7 except that 1.0 part by mass of the modified low-molecular olefin-based modifier (X) was added to the polypropylene-based resin (D1).

### (Comparative Example 9)

A bottle-shaped coated polypropylene-based molded article was obtained in a similar manner to Comparative Example 3 except that the kind of a thin film was changed to a SiOx film.

### (Comparative Example 10)

A bottle-shaped coated polypropylene-based molded article was obtained in a similar manner to Comparative Example 1 except that the kind of a thin film was changed to a SiOx film.

### (Comparative Example 11)

A bottle-shaped coated polypropylene-based molded article was obtained in a similar manner to Comparative Example 2 except that the kind of a thin film was changed to a SiOx film.

### (Comparative Example 12)

A bottle-shaped coated polypropylene-based molded article was obtained in a similar manner to Comparative Example 6 except that the kind of a thin film was changed to a SiOx film.

### (Comparative Example 13)

A bottle-shaped coated polypropylene-based molded article was obtained in a similar manner to Comparative Example 7 except that the kind of a thin film was changed to a SiOx film.

### (Comparative Example 14)

A bottle-shaped coated polypropylene-based molded article was obtained in a similar manner to Comparative Example 3 except that the kind of a thin film was changed to an AlOx film.

### (Comparative Example 15)

A bottle-shaped coated polypropylene-based molded article was obtained in a similar manner to Comparative Example 6 except that the kind of a thin film was changed to an AlOx film.

### (Comparative Example 16)

A bottle-shaped coated polypropylene-based molded article was obtained in a similar manner to Comparative Example 7 except that the kind of a thin film was changed to an AlOx film.

### (Comparative Example 17)

A bottle-shaped coated polypropylene-based molded article was obtained in a similar manner to Comparative Example 6 except that the kind of a thin film was changed to a SiOC film.

### (Comparative Example 18)

A bottle-shaped coated polypropylene-based molded article was obtained in a similar manner to Comparative Example 7 except that the kind of a thin film was changed to a SiOC film.

### (Comparative Example 19)

A bottle-shaped coated polypropylene-based molded article was obtained in a similar manner to Comparative Example 8 except that the kind of a thin film was changed to a SiOC film.

### (Comparative Example 20)

A bottle-shaped coated polypropylene-based molded article was obtained in a similar manner to Example 1 except that a polypropylene-based resin (D6) was formed of a mixture of 95 parts by mass of the propylene-based resin (A4) which was a copolymer of propylene and ethylene and had a crystalline melting point measured in conformity to JIS-K7121:1987 with a differential scanning calorimetry (DSC) of 128°C, and 5 parts by mass of the propylene-based resin (B2) which was a copolymer of propylene and ethylene and had a crystalline melting point measured in conformity to JIS-K7121:1987 with a differential scanning calorimetry (DSC) of 162°C.

### (Comparative Example 21)

A bottle-shaped coated polypropylene-based molded article was obtained in a similar manner to Example 1 except that 0.003 parts by mass of 2,5-dimethyl-2,5-di (benzoyl peroxy) hexane was added as an organic peroxide with respect to 100 parts by mass of the polypropylene-based resin (D1).

### (Comparative Example 22)

A bottle-shaped coated polypropylene-based molded article was obtained in a similar manner to Example 1 except that 0.045 parts by mass of 2,5-dimethyl-2,5-di (benzoyl peroxy) hexane was added as an organic peroxide with respect to 100 parts by mass of the polypropylene-based resin (D1).

### (Evaluation method)

MFR, a crystalline melting point, a content of a constituent unit, and Wp1 and Wp2 in each of the polypropylene-based resins (D1) to (D6) were measured as follows.

### (MFR)

MFR was measured in conformity to ASTM D-1238 at a measurement temperature of 230°C at a 2.16 kg load. When an organic peroxide was added, MFR of a mixture obtained by adding an organic peroxide to each of the polypropylene-based resins (D1) to (D6) was measured.

### (Crystalline melting point)

The crystalline melting point was measured in conformity to JIS-K7121:1987 with a differential scanning calorimetry (DSC) (Diamond DSC manufactured by PerkinElmer Co., Ltd.). A top of an endothermic peak measured here in the third step was defined as a crystalline melting point (Tm[°C]). When a plurality of endothermic peaks is present, a top of an endothermic peak having a maximum peak height is defined as a crystalline melting point (Tm[°C]).

### (Measurement condition)

measurement environment: nitrogen gas atmosphere
sample amount: 5 mg
sample shape: press film (molded at 230°C, thickness: 200 to 400 µm)
first step: The temperature is raised from 30°C to 240°C at 10°C/min, and is held for 10 minutes.
second step: The temperature is lowered to 60°C at 10°C/min.
third step: The temperature is raised to 240°C at 10°C/min.

### (Content of constituent unit)

The content of each constituent unit in the propylene-based resins (A1) to (A4) and the propylene-based resins (B1) to (B3) was determined by measurement under the following conditions using ¹³C-NMR.

### (¹³C-NMR measurement condition)

measuring device: LA400 type nuclear magnetic resonance apparatus manufactured by JEOL Ltd.
measurement mode: BCM (Bilevel Complete decoupling) observation frequency: 100.4 MHz
observation range: 17006.8 Hz
pulse width: C nuclear 45° (7.8 µ seconds)
pulse repetition time: 5 seconds
sample tube: 5 mmϕ
sample tube rotation speed: 12 Hz
cumulative number of times: 20000 times
measurement temperature: 125°C
solvent: 1,2,4-trichlorobenzene: 0.35 ml/heavy benzene: 0.2 ml
sample amount: about 40 mg

### (Temperature rising elution fractionation chromatograph (TREF))

An elution curve of a propylene-based resin composition by temperature rising elution fractionation chromatograph (TREF) was obtained as follows. A sample solution was introduced into a TREF column adjusted to a temperature of 160°C, and was dissolved therein for 60 minutes. Thereafter, the temperature was lowered to 95°C, and the sample solution was allowed to stand for 45 minutes. Subsequently, the temperature was lowered gradually to 0°C at a rate of 0.5°C/min, and the sample was adsorbed by a filler. Thereafter, the temperature of the column was raised to 140°C at 1.0°C/min to obtain an elution curve. A measuring device and a measurement condition will be indicated below. When a main elution peak temperature was referred to as Tp in the obtained elution curve, an elution amount in a temperature range higher than Tp was referred to as Wp1 (% by mass), and an elution amount in a temperature range of 10°C or lower was referred to as Wp2 (% by mass) with respect to the total elution amount at 0 to 135°C.

### 1) Measuring device

measuring device: TREF 200+ manufactured by Polymer Characterization, S.A.
TREF column: stainless steel column (3/8" o.d. x 15 cm)
flow cell: KBr cell having an optical path length of 1 mm, manufactured by GL Sciences Inc.
feed pump: Agilent Technologies 1200 series
valve oven: MODEL554 oven manufactured by GL Sciences Inc.
main oven: Agilent Technologies 7890A GC System
two series temperature controller: REX-C100 temperature controller manufactured by RKC Instrument Inc.
detector: IR4 manufactured by Polymer Characterization, S.A.
   MIRAN 1A CVF manufactured by FOXBORO Corporation
10-way valve: electric valve manufactured by Barco Co. , Ltd.
loop: 500 µ liter loop manufactured by Barco Inc.

### 2) Measurement condition

solvent: ortho-dichlorobenzene (300 ppm, containing BHT)
sample concentration: 0.40% (w/v)
injection amount: 0.3 ml
pump flow rate: 0.51 mL/min
detection wave number: 3.41 µm
column filler: stainless steel balls
column temperature distribution: within ± 2.0°C

Table 1 indicates polymerization conditions, MFR, a content of ethylene, and a crystalline melting point in each of the propylene-based resins (A1) to (A4) and (B1) to (B3). Table 2 or 3 indicates the kind and a blending amount of each of the propylene-based resins (A1) to (A4) and (B1) to (B3) blended to each of the polypropylene-based resins (D1) to (D6), a blending amount of an organic peroxide, MFR, a crystalline melting point, Wp1 and Wp2 of the polypropylene-based resins (D1) to (D6), a component of a nucleating agent and a blending amount thereof, the kind of a gas used for a plasma treatment in a removing step, and the kind of a thin film for each of Examples and Comparative Examples.

**[Table 1]**

| | | Unit | Synthesis Example 1 | Synthesis Example 2 | Synthesis Example 3 | Synthesis Example 4 | Synthesis Example 5 | Synthesis Example 6 | Synthesis Example 7 |
|---|---|---|---|---|---|---|---|---|---|
| Propylene-based resin | | | A2 | A1 | A3 | A4 | B2 | B1 | B3 |
| Polymerization conditions | *1 Addition amount of hydrogen to polymerization tank | MPa-G | 0.55 | 0.55 | 0.55 | 0.55 | 0.18 | 0.55 | 0.55 |
| | *2 Ethylene concentration of gas phase in polymerization tank | mol% | 1.4 | 1.0 | 2.2 | 2.6 | 0.1 | 0 | 0.9 |
| | *3 Internal temperature in system after stabilization | °C | 80 | 80 | 80 | 80 | 80 | 80 | 80 |
| | *3 Total pressure in system after stabilization | MPa-G | 1.1 | 1.1 | 1.1 | 1.1 | 0.7 | 1.1 | 1.1 |
| | | | | | | | | | |
| Physical properties | MFR(ASTM D-1238,230°C,2. 16kg) | g/10 minutes | 30.0 | 30.0 | 30.0 | 30.0 | 5.0 | 30.0 | 30.0 |
| | Content of ethylene | % by mass | 3.4 | 1.9 | 4.8 | 5.5 | 0.1 | 0 | 1.8 |
| | Crystalline melting point (JIS-K7121) | °C | 142 | 150 | 136 | 128 | 162 | 165 | 151 |

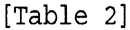

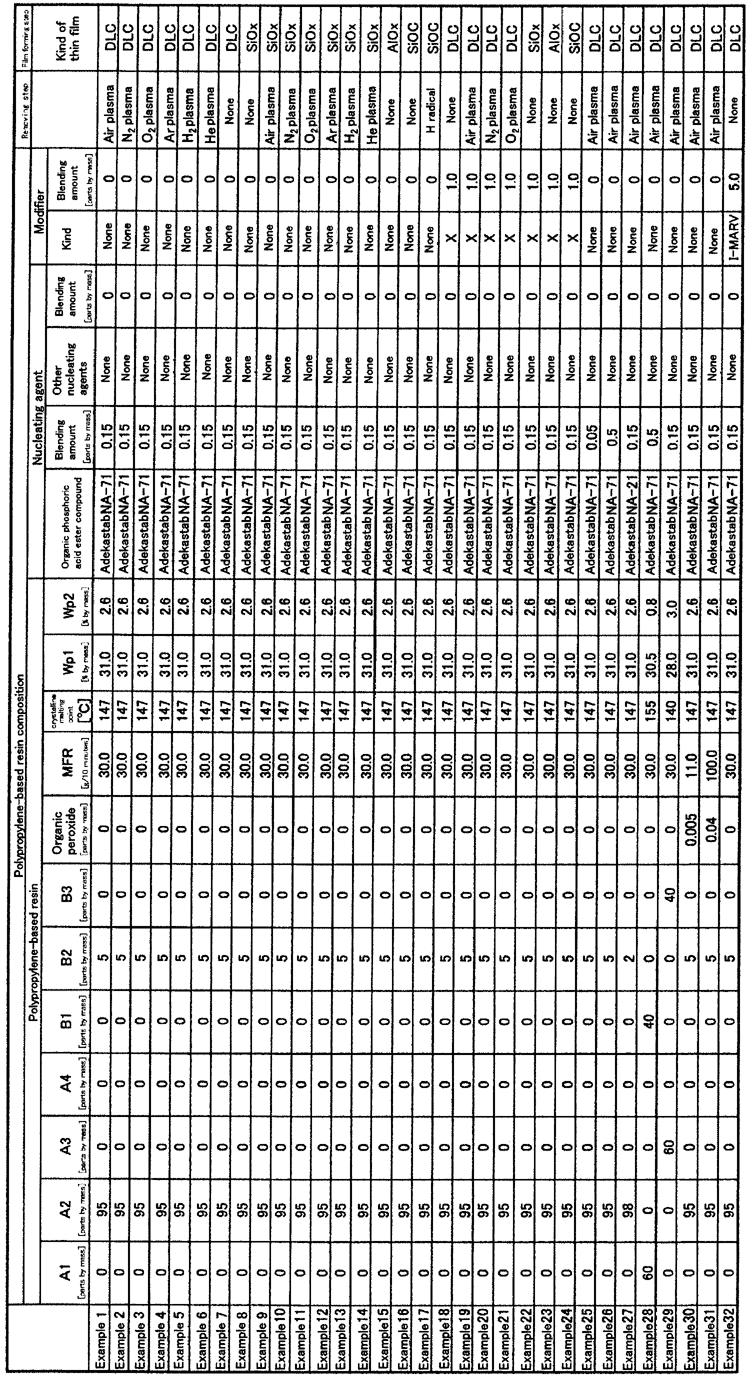

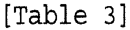

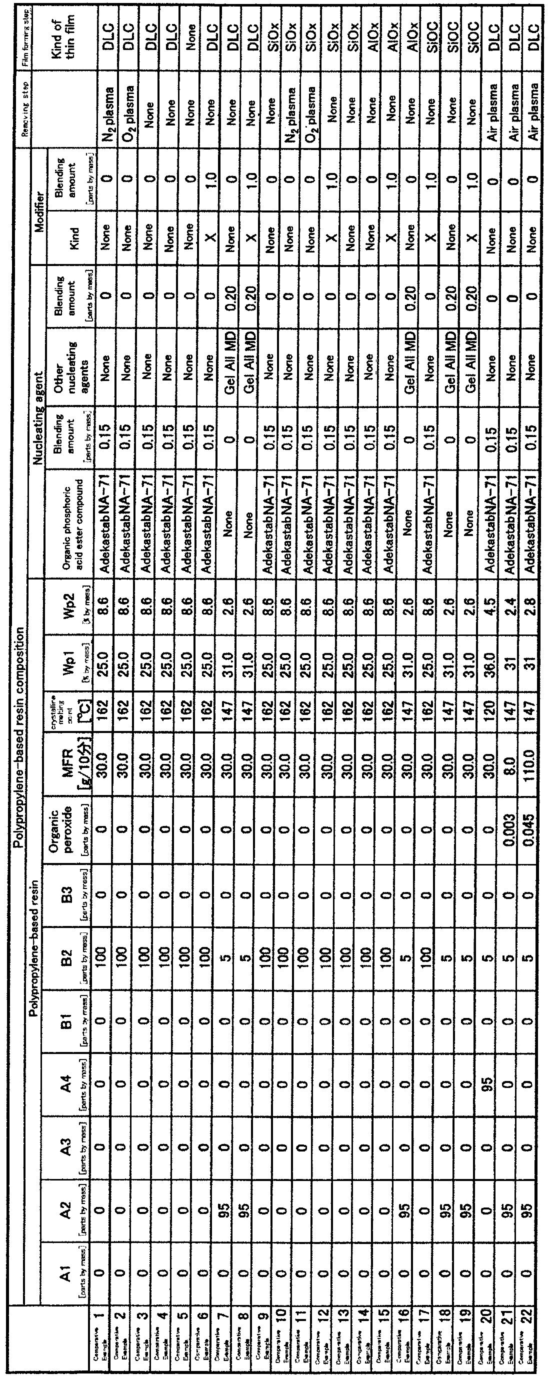

### (BIF)

Oxygen permeabilities before and after formation of a thin film were measured at 23°C using an oxygen permeability measuring apparatus (Model: OX-TRAN2/21 manufactured by MODERNCONTROL Corporation) for each bottle. An improvement factor (BIF) was determined by dividing an oxygen permeability before formation of a thin film by an oxygen permeability after formation of the thin film. Table 4 indicates oxygen permeabilities before and after formation of a thin film and BIF.

**[Table 4]**

| | Oxygen permeability [cc/bottle/day] | | BIF |
|---|---|---|---|
| | Before formation of thin film | After formation of thin film | [times] |
| Example 1 | 1.334 | 0.053 | 25.3 |
| Example 2 | 1.334 | 0.044 | 30.4 |
| Example 3 | 1.334 | 0.087 | 15.4 |
| Example 4 | 1.334 | 0.103 | 12.9 |
| Example 5 | 1.334 | 0.083 | 16.0 |
| Example 6 | 1.334 | 0.080 | 16.7 |
| Example 7 | 1.334 | 0.108 | 12.4 |
| Example 8 | 1.334 | 0.117 | 11.4 |
| Example 9 | 1.334 | 0.091 | 14.6 |
| Example 10 | 1.334 | 0.082 | 16.3 |
| Example 11 | 1.334 | 0.108 | 12.3 |
| Example 12 | 1.334 | 0.118 | 11.3 |
| Example 13 | 1.334 | 0.104 | 12.8 |
| Example 14 | 1.334 | 0.103 | 12.9 |
| Example 15 | 1.334 | 0.130 | 10.3 |
| Example 16 | 1.334 | 0.113 | 11.8 |
| Example 17 | 1.334 | 0.097 | 13.8 |
| Example 18 | 1.336 | 0.048 | 28.0 |
| Example 19 | 1.336 | 0.027 | 50.1 |
| Example 20 | 1.336 | 0.023 | 57.1 |
| Example 21 | 1.336 | 0.033 | 40.9 |
| Example 22 | 1.336 | 0.053 | 25.3 |
| Example 23 | 1.336 | 0.062 | 21.4 |
| Example 24 | 1.336 | 0.047 | 28.5 |
| Example 25 | 1.337 | 0.069 | 19.5 |
| Example 26 | 1.330 | 0.051 | 26.3 |
| Example 27 | 1.332 | 0.059 | 22.7 |
| Example 28 | 1.335 | 0.064 | 20.9 |
| Example 29 | 1.331 | 0.067 | 19.9 |
| Example 30 | 1.423 | 0.079 | 18.0 |
| Example 31 | 1.331 | 0.066 | 20.2 |
| Example 32 | 1.324 | 0.059 | 22.3 |
| Comparative Example 1 | 1.343 | 0.610 | 2.2 |
| Comparative Example 2 | 1.343 | 0.790 | 1.7 |
| Comparative Example 3 | 1.343 | 1.119 | 1.2 |
| Comparative Example 4 | 1.343 | 0.707 | 1.9 |
| Comparative Example 5 | 1.343 | - | - |
| Comparative Example 6 | 1.343 | 0.336 | 4.0 |
| Comparative Example 7 | 1.264 | 0.602 | 2.1 |
| Comparative Example 8 | 1.264 | 0.324 | 3.9 |
| Comparative Example 9 | 1.343 | 1.119 | 1.2 |
| Comparative Exemple 10 | 1.343 | 0.639 | 2.1 |
| Comparative Example 11 | 1.343 | 0.671 | 2.0 |
| Comparative Example 12 | 1.343 | 0.336 | 4.0 |
| Comparative Example 13 | 1.343 | 0.707 | 1.9 |
| Comparative Example 14 | 1.343 | 1.119 | 1.2 |
| Comparative Example 15 | 1.343 | 0.463 | 2.9 |
| Comparative Example 16 | 1.264 | 0.574 | 2.2 |
| Comparative Example 117 | 1.343 | 0.363 | 3.7 |
| Comparative Example 18 | 1.264 | 0.602 | 2.1 |
| Comparative Example 19 | 1.264 | 0.372 | 3.4 |
| Comparative Example 20 | 1.337 | 0.285 | 4.7 |
| Comparative Example 21 | 1.456 | 0.321 | 4.5 |
| Comparative Example 22 | 1.299 | 0.266 | 4.9 |

In each of Examples, an oxygen permeability of a coated polypropylene-based molded article is one tenth or less of an oxygen permeability of a polypropylene-based molded article not coated with a thin film. Each of Examples has an excellent gas barrier property. Meanwhile, any one of Comparative Examples 1 to 4, 6, 9 to 15, and 17 does not satisfy requirements (D-2), (D-3) and (D-4), and therefore have insufficient surface smoothness or a large influence by bleeding substances, resulting in an inferior gas barrier property. Any one of Comparative Examples 7, 8, 16, 18, and 19 does not satisfy requirement (C-2), and therefore have insufficient surface smoothness or a large influence by bleeding substances, resulting in an inferior gas barrier property. Comparative Example 20 does not satisfy requirement (D-2) and (D-4), and therefore has insufficient surface smoothness or a large influence by bleeding substances, resulting in an inferior gas barrier property. Comparative Example 21 or 22 does not satisfy requirement (D-1), and therefore has insufficient surface smoothness, resulting in an inferior gas barrier property.

## Claims

1. A coated polypropylene-based molded article comprising a molded article formed of a polypropylene-based resin composition and a thin film formed on a surface of the molded article, wherein
the polypropylene-based resin composition includes a polypropylene-based resin (D) satisfying requirements (D-1) to (D-4) and a nucleating agent (C) satisfying requirements (C-1) to (C-3), and
a content of the nucleating agent (C) is from 0.05 to 0.5 parts by mass with respect to 100 parts by mass of the polypropylene-based resin (D):
(C-1) the nucleating agent (C) contains an alkali metal element;
(C-2) the nucleating agent (C) contains an organic phosphoric acid ester compound represented by general formula (chemical formula 1): 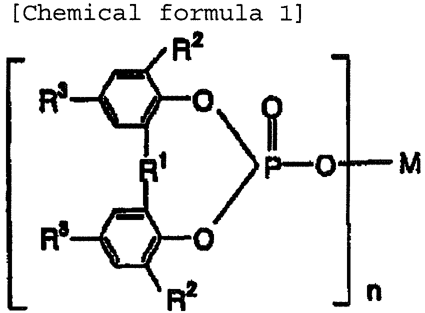 (in (chemical formula 1), R1 is a divalent hydrocarbon group having 1 to 10 carbon atoms, R2 and R3 are each hydrogen or a hydrocarbon group having 1 to 10 carbon atoms, R2 and R3 may be the same as or different from each other, M is an n-valent metal atom, and n is an integer of 1 to 3);
(C-3) the nucleating agent (C) contains at least one of aliphatic carboxylic acids and derivatives thereof;
(D-1) a melt flow rate (MFR) measured in conformity to ASTM D-1238 at a measurement temperature of 230°C at a 2.16 kg load is in a range of 11 to 100 g/10 minutes;
(D-2) a crystalline melting point measured in conformity to JIS-K7121:1987 with a differential scanning calorimetry (DSC) is in a range of 140 to 155°C;
(D-3) when a main elution peak temperature determined by temperature rising elution fractionation chromatography is referred to as Tp, an amount Wp1 (% by mass) eluted in a higher temperature range than Tp with respect to the total elution amount at 0 to 135°C is 26.5% by mass or more; and
(D-4) an amount Wp2 (% by mass) eluted at 10°C or lower, determined by temperature rising elution fractionation chromatography, is 4.0% by mass or less.

2. The coated polypropylene-based molded article according to claim 1, wherein
the polypropylene-based resin composition includes a polypropylene-based resin (A) satisfying requirements (A-1) and (A-2) and a polypropylene-based resin (B) satisfying requirements (B-1) and (B-2) as the polypropylene-based resin (D), and
a content of the polypropylene-based resin (A) is from 1 to 99 parts by mass with respect to 100 parts by mass of the total mass of the polypropylene-based resin (A) and the polypropylene-based resin (B):
(A-1) the polypropylene-based resin (A) is a copolymer of propylene, and one or more olefins selected from the group consisting of ethylene and α-olefins having 4 to 20 carbon atoms;
(A-2) a crystalline melting point measured in conformity to JIS-K7121:1987 with a differential scanning calorimetry (DSC) is in a range of 130 to 150°C;
(B-1) the polypropylene-based resin (B) is a propylene homopolymer or a copolymer of propylene, and one or more olefins selected from the group consisting of ethylene and α-olefins having 4 to 20 carbon atoms; and
(B-2) a crystalline melting point measured in conformity to JIS-K7121:1987 with a differential scanning calorimetry (DSC) is in a range of 151 to 165°C.

3. The coated polypropylene-based molded article according to claim 1 or 2, wherein the polypropylene-based molded article is a container.

4. The coated polypropylene-based molded article according to any one of claims 1 to 3, wherein a part or the whole of the thin film is any one of a carbon film, a SiOx film, a SiOC film, a metal oxide film, and a metal nitride film.

5. The coated polypropylene-based molded article according to any one of claims 1 to 4, wherein an oxygen permeability of the coated polypropylene-based molded article is one tenth or less of an oxygen permeability of a polypropylene-based molded article not coated with a thin film.
